# EUROPEAN PATENT APPLICATION

(11) **EP 4 834 683 A1**
(43) Date of publication of application: **04.11.2026**
(21) Application number: 24911561.9
(22) Date of filing: 27.12.2024
(51) Int. Cl.: B60W 10/06

(54) **VEHICLE MODE SWITCHING METHOD, DEVICE, AND SYSTEM, VEHICLE, COMPUTER PROGRAM AND COMPUTER READABLE MEDIUM**

(30) Priority: 29.12.2023 CN 202311866343
(71) Applicant: Great Wall Motor Company Limited, Baoding, Hebei 071000 (CN)
(72) Inventor: ZHENG, Yunlong, Baoding, Hebei 071000 (CN); CHANG, Xiao, Baoding, Hebei 071000 (CN); ZHAO, Qing, Baoding, Hebei 071000 (CN)
(74) Representative: Michalski Hüttermann & Partner mbB
(86) International application number: PCT/CN2024/143429
(87) International publication number: WO 2025/140645

(57) **Abstract**

The present disclosure provides a vehicle mode switching method, apparatus, a system, a vehicle, a computer program, and a computer-readable medium, belonging to the field of vehicle control technologies. The present disclosure is capable of, in response to a mode switch request, maintaining a clutch in a closed state and an engine in a driving state, performing torque regulation on a first motor, and when a first synchronizer satisfies a first gear shift condition, shifting the first synchronizer from an engaged gear to a power split gear, and performing speed regulation on the first motor, and when a second synchronizer satisfies a second gear shift condition, shifting the second synchronizer from a neutral gear to a target gear. The present disclosure can sequentially complete gear shifting operations of the first synchronizer and the second synchronizer without disengaging the clutch and without interrupting engine torque, enabling the engine to continuously drive the first motor to maintain a power generation state while also immediately outputting torque to the wheels via the power split mechanism, thereby effectively improving the dynamic response performance of the vehicle during the mode switching process.

## Description

### CROSS-REFERENCE TO RELATED DISCLOSURE

The present disclosure claims the priority of Chinese Patent Application No. 202311866343.1, filed with the China National Intellectual Property Administration on December 29, 2023, entitled "A VEHICLE MODE SWITCHING METHOD, DEVICE, SYSTEM, AND VEHICLE" the entire contents of which are incorporated herein by reference.

### TECHNICAL FIELD

The present disclosure relates to the field of vehicle control technologies, and in particular, to a vehicle mode switching method, apparatus, a system, a vehicle, a computer program, and a computer-readable medium.

### BACKGROUND

With the rapid development of the automotive industry, in response to national policies on energy conservation, emission reduction, and carbon neutrality, traditional fuel vehicles are gradually transitioning towards hybrid vehicles. To adapt to different road conditions and driving demands, hybrid vehicles are typically equipped with multiple driving modes, including a series mode and a power split mode. During vehicle operation, driving modes may switch between each other under certain conditions based on changes in road conditions and driving demands.

In related art, when a vehicle switches from the series mode to the power split mode, it usually requires the clutch to be disengaged first, followed by torque reduction and speed adjustment operations on the engine. After these operations are completed, the clutch is reengaged to finalize the mode transition. However, this method involves the process of disengaging and re-engaging the clutch, which leads to an interruption in engine power output. Consequently, not only does it cause the motor to stop generating electricity, but it also results in longer mode-switching times and delayed engine power response. This ultimately affects the overall vehicle dynamic performance.

### SUMMARY

The present disclosure provides a vehicle mode switching method, apparatus, a system, a vehicle, a computer program, and a computer-readable medium to address a problem of poor overall vehicle power response performance of a hybrid vehicle during a process of switching from a series mode to a power split mode.

To solve the above problem, the present disclosure adopts the following technical solutions.

In a first aspect, an embodiment of the present disclosure provides a vehicle mode switching method. The vehicle includes an engine, a clutch, a first motor, and a transmission. The transmission includes a power split mechanism, a transmission input shaft, a transmission output shaft, a first synchronizer, and a second synchronizer. The engine is connected to a first input end of the power split mechanism via the clutch. The first motor is connected to a second input end of the power split mechanism. An output end of the power split mechanism is connected to the transmission input shaft. The second synchronizer is disposed between the transmission input shaft and the transmission output shaft. The first synchronizer is disposed between the first input end and the output end. The method includes:
in response to a mode switch request for switching from a series mode to a power split mode, maintaining the clutch in a closed state and the engine in a driving state, and performing torque regulation on a current motor torque of the first motor, so that the first synchronizer satisfies a first gear shift condition;
when the first synchronizer satisfies the first gear shift condition, controlling the first synchronizer to shift from an engaged gear to a power split gear, and performing speed regulation on a current motor speed of the first motor, so that the second synchronizer satisfies a second gear shift condition; and
when the second synchronizer satisfies the second gear shift condition, controlling the second synchronizer to shift from a neutral gear to a target gear, so that the vehicle switches from the series mode to the power split mode.

In an embodiment of the present disclosure, the power split mechanism includes a ring gear, a sun gear, a plurality of planet gears meshed with the ring gear and the sun gear, and a planet carrier rotatably connected to the plurality of planet gears. The planet carrier serves as the first input end and is connected to the engine. The sun gear serves as the second input end and is connected to the first motor. The ring gear serves as the output end and is connected to the transmission input shaft. The first synchronizer is disposed between the planet carrier and the ring gear. The step of performing torque regulation on the current motor torque of the first motor includes:
determining, based on a current engine torque of the engine and a first gear ratio between the sun gear and the planet carrier, a target motor torque of the first motor; and
performing, based on the target motor torque, torque regulation on the current motor torque of the first motor.
torque regulation gradientIn an embodiment of the present disclosure, the method further includes:
   when a first torque difference between the current motor torque and the target motor torque is less than a first torque threshold, triggering timing of a first duration during which the first torque difference is less than the first torque threshold, and timing of a second duration during which a fluctuation amplitude of the current engine torque is less than a second torque threshold; and
   when the first duration is greater than a first duration threshold and the second duration is greater than a second duration threshold, determining that the first synchronizer satisfies the first gear shift condition.

In an embodiment of the present disclosure, the step of performing speed regulation on the current motor speed of the first motor includes:
determining, based on a current gear of the first synchronizer and a target gear of the second synchronizer, a target motor speed of the first motor; and
performing, based on the target motor speed, speed regulation on the current motor speed of the first motor.

In an embodiment of the present disclosure, the step of determining, based on the current gear of the first synchronizer and the target gear of the second synchronizer, the target motor speed of the first motor includes:
when the current gear of the first synchronizer is the power split gear, determining a gear ratio between the planet carrier and the ring gear as a second gear ratio;
determining, based on the target gear of the second synchronizer, a gear ratio between the transmission input shaft and target wheels as a third gear ratio;
determining, based on the second gear ratio, the first gear ratio, and the third gear ratio, a fourth gear ratio between the target wheels and the first motor; and
determining, based on the fourth gear ratio and a current wheel speed of the target wheels, the target motor speed of the first motor.

In an embodiment of the present disclosure, the method further includes:
when the current motor speed of the first motor reaches the target motor speed, triggering timing of a third duration during which a fluctuation amplitude of the current motor speed is less than a speed threshold; and
when the third duration is greater than a third duration threshold, determining that the second synchronizer satisfies the second gear shift condition.

In an embodiment of the present disclosure, the step of controlling the second synchronizer to shift from the neutral gear to the target gear when the second synchronizer satisfies the second gear shift condition includes:
when the second synchronizer satisfies the second gear shift condition, controlling the second synchronizer to perform a pre-synchronization operation, so that a shift fork of the second synchronizer moves to a pre-synchronization position; and
when it is determined that the shift fork of the second synchronizer has reached the pre-synchronization position and a first torque difference between the current motor torque and the target motor torque is less than a fourth torque threshold, controlling the second synchronizer to move from the pre-synchronization position to a target position, so that the second synchronizer shifts to the target gear.

In a second aspect, an embodiment of the present disclosure provides a vehicle mode switching apparatus. The vehicle includes an engine, a clutch, a first motor, and a transmission. The transmission includes a power split mechanism, a transmission input shaft, a transmission output shaft, a first synchronizer, and a second synchronizer. The engine is connected to a first input end of the power split mechanism via the clutch. The first motor is connected to a second input end of the power split mechanism. An output end of the power split mechanism is connected to the transmission input shaft. The second synchronizer is disposed between the transmission input shaft and the transmission output shaft, and the first synchronizer is disposed between the first input end and the output end. The device includes:
a torque regulation module, configured to, in response to a mode switch request for switching from a series mode to a power split mode, maintain the clutch in a closed state and the engine in a driving state, and perform torque regulation on a current motor torque of the first motor, so that the first synchronizer satisfies a first gear shift condition;
a speed regulation module, configured to, when the first synchronizer satisfies the first gear shift condition, control the first synchronizer to shift from an engaged gear to a power split gear; and perform speed regulation on a current motor speed of the first motor, so that the second synchronizer satisfies a second gear shift condition;
a gear shift module, configured to, when the second synchronizer satisfies the second gear shift condition, control the second synchronizer to shift from a neutral gear to a target gear, so that the vehicle switches from the series mode to the power split mode.

In an embodiment of the present disclosure, the power split mechanism comprises a ring gear, a sun gear, a plurality of planet gears meshed between the ring gear and the sun gear, and a planet carrier rotatably connected to the plurality of planet gears; the planet carrier serves as the first input end and is connected to the engine; the sun gear serves as the second input end and is connected to the first motor; the ring gear serves as the output end and is connected to the transmission input shaft. The torque regulation module includes:
a target motor torque determination submodule, configured to determine, based on a current engine torque of the engine and a first gear ratio between the sun gear and the planet carrier, a target motor torque of the first motor;
a torque regulation submodule, configured to perform, based on the target motor torque, torque regulation on the current motor torque of the first motor.

In an embodiment of the present disclosure, the vehicle mode switching device further includes:
a first timing module, configured to, when a first torque difference between the current motor torque and the target motor torque is less than a first torque threshold, trigger timing of a first duration during which the first torque difference is less than the first torque threshold, and timing of a second duration during which a fluctuation amplitude of the current engine torque is less than a second torque threshold;
a first condition determination module, configured to, when the first duration is greater than a first duration threshold and the second duration is greater than a second duration threshold, determine that the first synchronizer satisfies the first gear shift condition.

In an embodiment of the present disclosure, the speed regulation module includes:
a target motor speed determination submodule, configured to determine , based on a current gear of the first synchronizer and a target gear of the second synchronizer, a target motor speed of the first motor;
a speed regulation submodule, configured to perform, based on the target motor speed, speed regulation on the current motor speed of the first motor.

In an embodiment of the present disclosure, the target motor speed determination submodule includes:
a first gear ratio determination unit, configured to, when the current gear of the first synchronizer is the power split gear, determine a gear ratio between the planet carrier and the ring gear as a second gear ratio;
a second gear ratio determination unit, configured to determine, based on the target gear of the second synchronizer, a gear ratio between the transmission input shaft and a target wheel as a third gear ratio;
a third gear ratio determination unit, configured to determine, based on the second gear ratio, the first gear ratio, and the third gear ratio, a fourth gear ratio between the target wheel and the first motor; and
a target motor speed determination unit, configured to determine, based on the fourth gear ratio and a current wheel speed of the target wheel, the target motor speed of the first motor.

In an embodiment of the present disclosure, the vehicle mode switching device further includes:
s second timing module, configured to, when the current motor speed of the first motor reaches the target motor speed, trigger timing of a third duration during which a fluctuation amplitude of the current motor speed is less than a speed threshold;
s second condition determination module, configured to, when the third duration is greater than a third duration threshold, determine that the second synchronizer satisfies the second gear shift condition.

In an embodiment of the present disclosure, the gear switching module includes:
a pre-synchronization submodule, configured to, when the second synchronizer satisfies the second gear shift condition, controll the second synchronizer to perform a pre-synchronization operation, so that a shift fork of the second synchronizer moves to a pre-synchronization position;
a gear switching submodule, configured to, when it is determined that the shift fork of the second synchronizer has reached the pre-synchronization position and a first torque difference between the current motor torque and the target motor torque is less than a fourth torque threshold, control the second synchronizer to move from the pre-synchronization position to a target position, so that the second synchronizer switches to the target gear.

In a third aspect, an embodiment of the present disclosure provides a vehicle mode switching system. The vehicle includes an engine,, a clutch, a first motor, and a transmission. The transmission includes a power split mechanism, a transmission input shaft, a transmission output shaft, a first synchronizer, and a second synchronizer. The engine is connected to a first input end of the power split mechanism via the clutch. The first motor is connected to a second input end of the power split mechanism. An output end of the power split mechanism is connected to the transmission input shaft. The second synchronizer is disposed between the transmission input shaft and the transmission output shaft, and the first synchronizer is disposed between the first input end and the output end. The system includes a vehicle control unit, a transmission controller, a motor controller, and an engine controller.

The vehicle control unit is configured to, in response to a mode switch request for switching from a series mode to a power split mode, maintain the clutch in a closed state and the engine in a driving state, and perform torque regulation on a current motor torque of the first motor, so that the first synchronizer satisfies a first gear shift condition.

The transmission controller is configured to, in response to the clutch state hold request, maintain the clutch in an engaged gear.

The engine controller is configured to, in response to the engine state hold request, maintain the engine in a driving state.

The motor controller is configured to, in response to the torque regulation request, perform torque regulation on a current motor torque of the first motor, so that the first synchronizer satisfies a first gear shift condition.

The vehicle control unit is further configured to, when the first synchronizer satisfies the first gear shift condition, control the transmission controller to shift the first synchronizer from an engaged gear to a power split gear, and send a speed regulation request to the motor controller.

The motor controller is further configured to, in response to the speed regulation request, perform speed regulation on a current motor speed of the first motor, so that the second synchronizer satisfies a second gear shift condition;
The vehicle control unit is further configured to, when the second synchronizer satisfies the second gear shift condition, control the transmission controller to shift the second synchronizer from a neutral gear to a target gear, so that the vehicle switches from the series mode to the power split mode.

In a fourth aspect, an embodiment of the present disclosure provides a vehicle, including the vehicle mode switching system proposed in the third aspect of the present disclosure.

In a fifth aspect, an embodiment of the present disclosure provides a computer program, including computer-readable codes. When the computer-readable codes are executed on a computing processing device, the computing processing device is configured to execute the above-mentioned vehicle mode switching method.

In a sixth aspect, an embodiment of the present disclosure provides a computer-readable medium, in which the above-mentioned computer program is stored.

Compared with the prior art, the present disclosure includes the following advantages.

The vehicle mode switching method provided by the embodiments of the present disclosure can, in response to a mode switch request for switching from the series mode to the power split mode, maintain the clutch in an engaged gear and the engine in a driving state, and perform torque regulation on the current motor torque of the first motor. When the first synchronizer satisfies the first gear shift condition, it can control the first synchronizer to shift from the engaged gear to the power split gear, and perform speed regulation on the current motor speed of the first motor. When the second synchronizer satisfies the second gear shift condition, it can control the second synchronizer to shift from the neutral gear to the target gear, so that the vehicle switches from the series mode to the power split mode. By sequentially performing torque regulation and speed regulation on the first motor, the embodiments of the present disclosure enable the gear shifting operations of the first synchronizer and the second synchronizer to be successfully completed without disengaging the clutch or interrupting the engine torque during the vehicle mode switching process. Thus, the engine can not only continuously drive the first motor to maintain a power generation state via the power split mechanism, meeting the charging demand of the traction battery, but can also immediately output torque to the wheels via the power split mechanism, enabling the vehicle to switch from the series mode to the power split mode more quickly and smoothly, effectively improving the vehicle power response performance during the mode switching process.

The above description is only an overview of the technical solutions of the present disclosure. In order to understand the technical means of the present disclosure more clearly, it can be implemented according to the content of the specification. In order to make the above and other purposes, features, and advantages of the present disclosure more obvious and understandable, specific embodiments of the present disclosure are exemplified below.

### BRIEF DESCRIPTION OF THE DRAWINGS

In order to more clearly illustrate the technical solutions in the embodiments of the present disclosure or related art, the drawings required for use in the description of the embodiments or related art will be briefly introduced below. Obviously, the drawings in the following description are some embodiments of the present disclosure. For those of ordinary skill in the art, other drawings can be obtained based on these drawings without creative effort.
FIG. 1 is a schematic structural diagram of a hybrid vehicle according to an embodiment of the present disclosure;
FIG. 2 is a step flow chart of a vehicle mode switching method according to an embodiment of the present disclosure;
FIG. 3 is a schematic diagram of functional modules of a vehicle mode switching apparatus according to an embodiment of the present disclosure;
FIG. 4 is a schematic structural diagram of a vehicle mode switching system according to an embodiment of the present disclosure;
FIG. 5 is a schematic structural diagram of a vehicle according to an embodiment of the present disclosure;
FIG. 6 schematically shows a block diagram of a computing processing device for executing the method according to the present disclosure;
FIG. 7 schematically shows a storage unit for holding or carrying program code implementing the method according to the present disclosure.

### DETAILED DESCRIPTION OF THE EMBODIMENTS

To make the purposes, technical solutions, and advantages of the embodiments of the present disclosure clearer, the technical solutions in the embodiments of the present disclosure will be clearly and completely described below with reference to the accompanying drawings in the embodiments of the present disclosure. Obviously, the described embodiments are part of the embodiments of the present disclosure, not all of them. Based on the embodiments in the present disclosure, all other embodiments obtained by those skill in the art without creative efforts shall fall within the scope of protection of the present disclosure.

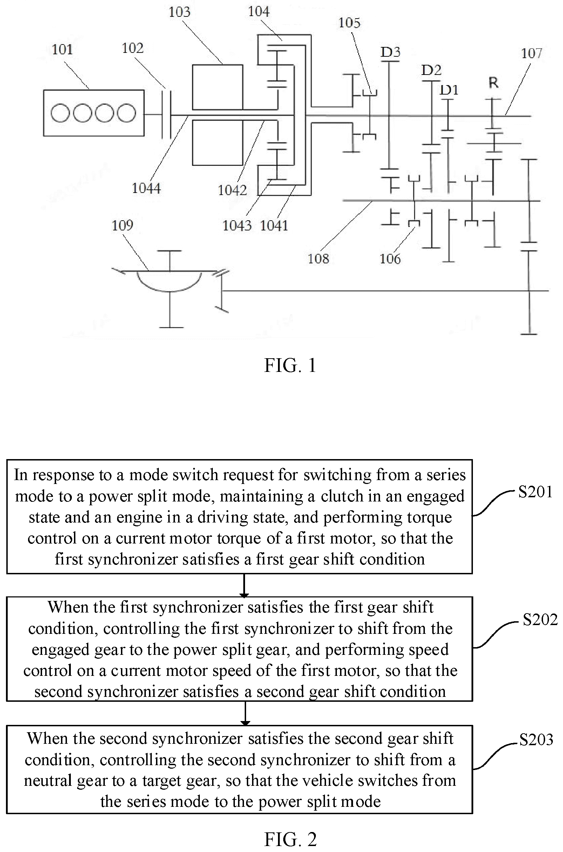

Referring to FIG. 1, FIG. 1 shows a schematic structural diagram of a hybrid vehicle according to an embodiment of the present disclosure is shown. A front axle of the hybrid vehicle is provided with an engine 101, a clutch 102, a first motor 103, and a transmission. The transmission includes a power split mechanism 104, a transmission input shaft 107, a transmission output shaft 108, a first synchronizer 105, and a second synchronizer 106. The engine 101 is connected to a first input end of the power split mechanism 104 via the clutch 102, the first motor 103 is connected to a second input end of the power split mechanism 104, and an output end of the power split mechanism 104 is connected to the transmission input shaft 107.

The second synchronizer 106 is disposed between the transmission input shaft 107 and the transmission output shaft 108, and is configured to engage or disengage the transmission input shaft 107 and the transmission output shaft 108. Specifically, when the second synchronizer 106 is in an engaged gear, the second synchronizer 106 is configured to engage the transmission input shaft 107 and the transmission output shaft 108; when the second synchronizer 106 is in a neutral gear, the second synchronizer 106 is configured to disengage the transmission input shaft 107 and the transmission output shaft 108.

The first synchronizer 105 is disposed between the first input end and the output end, and is configured to engage or disengage the first input end and the output end. Specifically, when the first synchronizer 105 is in an engaged gear, the first synchronizer 105 is configured to engage the first input end and the output end; when the first synchronizer 105 is in a power split gear, the first synchronizer 105 is configured to disengage the first input end and the output end. It should be noted that the first synchronizer 105 is configured to control the switching of the vehicle between a power split mode and other modes. That is, when the first synchronizer 105 is in the power split gear, the vehicle can be in the power split mode; and when the first synchronizer 105 is in the engaged gear, the vehicle can be in modes other than the power split mode, such as a series mode, a direct drive mode, or a pure electric four-wheel drive mode.

Furthermore, the transmission output shaft 108 is further connected to front axle wheels via a front differential 109, for transmitting power to the front axle wheels through the front differential 109 to drive the front axle of the vehicle. A rear axle of the hybrid vehicle is further provided with a second motor (not shown in the figures), and the second motor is configured to transmit power to rear axle wheels via a rear differential (not shown in the figures) to drive the rear axle of the vehicle.

Since the hybrid vehicle adopting the above structure is configured with the power split mechanism 104, and the power split mechanism 104 is simultaneously connected to the engine 101, the first motor 103, and the transmission input shaft 107, the vehicle can have multiple driving modes including the series mode and the power split mode. Furthermore, by changing the gear state of the first synchronizer 105 and the second synchronizer 106, switching between different driving modes of the vehicle can be achieved.

Specifically, in the power split mode, the first synchronizer 105 is in the power split gear. Meanwhile, the first synchronizer is in the disengaged gear for disconnecting the first input end and the output end. The second synchronizer 106 is in the engaged gear. The engine 101 is in a driving state. The clutch 102 is in a closed state. The first motor 103 is in a power generation state, and the second motor is in a driving state. At this time, the driving force output by the engine 101 is transmitted to the power split mechanism 104 through the clutch 102 and the first input end. The power split mechanism 104 transmits a part of the driving force to the first motor 103 through the second input end to drive the first motor 103 to generate electricity (at this time, the first motor 103 outputs negative torque), and the generated electrical energy is provided to a traction battery for charging. The power split mechanism 104 also transmits another part of the driving force to the transmission input shaft 107 through the output end, and the transmission input shaft 107 transmits this part of the driving force to the front axle of the vehicle sequentially through the second synchronizer 106, the transmission output shaft 108, and the front differential 109 to drive the vehicle. The distribution ratio of the driving force may be set according to actual needs. That is, in the power split mode, part of the output power of the engine 101 is configured to drive the first motor 103 to charge the traction battery, and another part of the output power is configured to directly drive the vehicle.

In the series mode, the first synchronizer 105 is in the engaged gear. At this time, the first synchronizer 105 is configured to engage the first input end and the output end. The second synchronizer 106 is in a neutral gear. The engine 101 is in the driving state. The clutch 102 is in the closed state. The first motor 103 is in the power generation state, and the second motor is in the driving state. At this time, since the second synchronizer 106 is in the neutral gear, the driving force output by the engine 101 will not be transmitted to the transmission input shaft 107 through the first input end, the first synchronizer 105, and the output end. The driving force output by the engine 101 will be transmitted to the power split mechanism 104 through the first input end, and then the power split mechanism 104 transmits all of this driving force to the first motor 103 through the second input end to drive the first motor 103 to generate electricity, and the generated electrical energy is provided to the second motor to drive the vehicle.

In the related art, to avoid damage to actuating mechanisms such as the clutch 102 and synchronizers, when the vehicle switches from the series mode to the power split mode, it is usually necessary for the vehicle to first disengage the clutch 102, then perform torque reduction and speed regulation on the engine 101, and then re-engage the clutch 102 after the torque reduction and speed regulation are completed to complete the mode switching. However, this method involves the process of disengaging and engaging the clutch 102, which will cause an interruption in the power of the engine 101. On the one hand, it will cause the first motor 103 to stop generating electricity, and the first motor 103 needs to wait until the clutch 102 is completely engaged and the engine 101 outputs torque again before it can charge the traction battery; on the other hand, it will also lead to a longer switching chain and a longer mode switching time, and the engine 101 cannot timely output power to the wheels, thereby affecting the overall vehicle power response performance.

Aiming at the problem of poor overall vehicle power response performance when a hybrid vehicle switches from the series mode to the power split mode, the present disclosure aims to provide the vehicle mode switching method. By sequentially performing torque regulation and speed regulation on the first motor 103 during the vehicle mode switching process, the gear shifting operations of the first synchronizer 105 and the second synchronizer 106 can be completed sequentially without disengaging the clutch 102 and without interrupting the torque of the engine 101. Thus, the engine 101 can not only continuously drive the first motor 103 to remain in the power generation state through the power split mechanism 104 to meet the charging demand of the traction battery, but also immediately output torque to the wheels through the power split mechanism 104, enabling the vehicle to switch from the series mode to the power split mode more quickly and smoothly, effectively improving the power response performance of the vehicle during the mode switching process.

Referring to FIG. 2, FIG. 2 shows a vehicle mode switching method according to the present disclosure is shown, applied to a hybrid vehicle adopting the above structure. The method may include the following steps.

S201: in response to a mode switch request for switching from a series mode to a power split mode, maintaining a clutch 102 in a closed state and an engine 101 in a driving state, and performing torque regulation on a current motor torque of a first motor 103, so that the first synchronizer 105 satisfies a first gear shift condition.

It should be noted that an execution subject of this embodiment may be a computing service device with data processing, network communication, and program running functions, or an electronic device with the above functions such as a driving computer, an onboard computer, an Electronic Control Unit (ECU) or a Hybrid Control Unit (HCU). This embodiment will take the HCU as the execution subject for explanation. It should be noted that this implementation does not impose specific restrictions on the execution subject of the vehicle.

In this implementation, the HCU is capable of monitoring an accelerator pedal signal and State of Charge (SOC) of a traction battery to determine whether the vehicle needs to switch from the series mode to the power split mode. The accelerator pedal signal may include an throttle opening and a throttle opening change rate of an accelerator pedal.

In this implementation, by monitoring the accelerator pedal signal, it can be determined whether the driver has a demand for rapid acceleration; by monitoring the State of Charge of the traction battery, it can be determined whether the traction battery has a charging demand.

In a specific implementation, the accelerator pedal signal may include the throttle opening of the accelerator pedal and the throttle opening change rate of the accelerator pedal. Thus, if the HCU detects that the current driving mode of the vehicle is the series mode, the throttle opening of the accelerator pedal is greater than an opening threshold, the throttle opening change rate of the accelerator pedal is greater than a change rate threshold, and the State of Charge of the traction battery is less than a power threshold, it indicates that the driver has a demand for rapid acceleration when the traction battery power is low. At this time, to simultaneously meet the driver's power demand and the charging demand of the traction battery, the vehicle will automatically trigger a mode switch request for switching from the series mode to the power split mode. Then, the HCU will respond to the mode switch request, maintain the clutch 102 in the closed state and the engine 101 in the driving state, and perform torque regulation on the current motor torque of the first motor 103, so that the first synchronizer 105 satisfies the first gear shift condition.

In this implementation, the HCU will send a clutch state hold request to a transmission controller in response to the vehicle mode switch request, so that the transmission controller responds to the clutch state hold request and maintains the clutch 102 in the closed state. Meanwhile, the HCU will send an engine state hold request to an engine controller, so that the engine controller responds to the engine state hold request and maintains the engine 101 in the driving state.

Furthermore, the HCU will also send a gear signal including a target gear corresponding to the power split mode to the transmission controller, so that the transmission controller obtains the target gear and, when the second synchronizer 106 satisfies the second gear shift condition, shifts the second synchronizer 106 from the current gear to the target gear.

It should be noted that in the series mode, the first synchronizer 105 is in the engaged gear. At this time, the first input end and the output end of the power split mechanism 104 are in a locked state, and the output end is connected to the transmission input shaft 107, so that a speed ratio between the first input end and the transmission input shaft 107 is 1:1. When the vehicle switches from the series mode to the power split mode, the first synchronizer 105 needs to be disengaged from the engaged gear to the power split gear. At this time, the speed ratio between the first input end of the power split mechanism 104 and the transmission input shaft 107 can be set to a value greater than 1 as needed, for example, 2:1. To avoid damage to the first synchronizer 105, when the first synchronizer 105 is disengaged, the torque applied to the first synchronizer 105 is required to be a small value, ideally zero.

In this implementation, considering that when the clutch 102 is closed, the torques output by the engine 101 and the first motor 103 can be simultaneously applied to the power split mechanism 104, therefore, by performing torque regulation on the current motor torque of the first motor 103, the torque applied by the first motor 103 to the power split mechanism 104 can be used to offset the torque applied by the engine 101 to the power split mechanism 104, thereby regulating the torque acting on the first synchronizer 105 from the power split mechanism 104. Thus, without disengaging the clutch 102 and without reducing the torque of the engine 101, the crankshaft end torque can be balanced to the torque required for the engagement of the first synchronizer 105.

In a specific implementation, the HCU will send a torque regulation request including a target motor torque to the motor controller in response to the mode switch request, so that the motor controller responds to the torque regulation request and performs torque regulation on the current motor torque of the first motor 103 according to the target motor torque, so that the first synchronizer 105 satisfies the first gear shift condition.

S202: when the first synchronizer 105 satisfies the first gear shift condition, controlling the first synchronizer 105 to shift from the engaged gear to the power split gear, and performing speed regulation on a current motor speed of the first motor 103, so that the second synchronizer 106 satisfies a second gear shift condition.

In this implementation, after detecting that the first synchronizer 105 satisfies the first gear shift condition and the current gear is the engaged gear, the HCU will send a first gear shift instruction indicating that the target gear is the power split gear to the transmission controller, so that the transmission controller responds to the gear shift instruction and controls the first synchronizer 105 to disengage to the power split gear.

In this implementation, if the HCU detects that the first synchronizer 105 has shifted to the power split gear, it will trigger speed regulation for the first motor 103 and send a speed regulation request including a target motor speed to the motor controller, so that the motor controller responds to the speed regulation request and performs speed regulation on the current motor speed of the first motor 103 based on the target motor speed, so that the second synchronizer 106 satisfies the second gear shift condition.

It should be noted that the second synchronizer 106 is disposed between the transmission input shaft 107 and the transmission output shaft 108, and is configured to regulate a speed ratio between the transmission input shaft 107 and the transmission output shaft 108. When the second synchronizer 106 is engaged, a speed difference between the two ends of the second synchronizer 106 needs to be regulated to a small value, ideally zero.

In this implementation, considering that the first motor 103 is connected to the power split mechanism 104 and the torque balance of the engine 101 has been achieved using the first motor 103, therefore, by performing speed regulation on the first motor 103, the speed of the transmission input shaft 107 can also be regulated without disengaging the clutch 102 and without reducing the torque of the engine 101, so that the second synchronizer 106 satisfies the second gear shift condition.

S203: when the second synchronizer 106 satisfies the second gear shift condition, controlling the second synchronizer 106 to shift from a neutral gear to a target gear, so that the vehicle switches from the series mode to the power split mode.

In this implementation, after detecting that the second synchronizer 106 satisfies the second gear shift condition and the current gear is the neutral gear, the HCU will send a second gear shift instruction including the target gear to the transmission controller, so that the transmission controller responds to the second gear shift instruction and controls the second synchronizer 106 to shift from the neutral gear to the target gear corresponding to the power split mode. For a transmission with three forward gear positions, the target gear is usually 2nd gear or 3rd gear.

In this implementation, after determining that the second synchronizer 106 has shifted to the target gear, the HCU will set the current driving mode of the vehicle from the series mode to the power split mode, and then control the engine 101, the first motor 103, and the second motor to output torque according to a torque distribution strategy in the power split mode.

Specifically, the torque distribution strategy includes a front axle torque distribution strategy and a rear axle torque output strategy. The HCU is configured to execute the front axle torque distribution strategy, controlling the engine 101 to output a first torque with a positive value, and controlling the first motor 103 to output a second torque with a negative value, to charge the traction battery while driving the front axle of the vehicle; at the same time, the HCU is also configured to execute the rear axle torque output strategy, controlling the second motor to output a third torque with a positive value to drive the rear axle of the vehicle.

It should be noted that the first torque is greater than an absolute value of the second torque. Thus, the first torque transmitted from the engine 101 to the power split mechanism 104 can be divided by the power split mechanism 104 into a power generation sub-torque and a driving sub-torque. The power generation sub-torque is equal to the absolute value of the second torque, and is configured to be transmitted to the first motor 103 via the power split mechanism 104 to drive the first motor 103 to generate electricity, and the generated electrical energy is provided to the traction battery for charging; the driving sub-torque is a difference between the first torque and the absolute value of the second torque, and is configured to be transmitted to the transmission input shaft 107 via the power split mechanism 104, and then transmitted by the transmission input shaft 107 sequentially through the second synchronizer 106, the transmission output shaft 108, and the front differential 109 to the front axle of the vehicle to drive the vehicle.

In the vehicle mode switching method provided by the embodiments of the present disclosure, by sequentially performing torque regulation and speed regulation on the first motor 103 during the vehicle mode switching process, the shifting operations of the first synchronizer 105 and the second synchronizer 106 can be completed sequentially without disengaging the clutch 102 and without interrupting the torque of the engine 101. Thus, the engine 101 can not only continuously drive the first motor 103 to remain in the power generation state through the power split mechanism 104 to meet the charging demand of the traction battery, but also immediately output torque to the wheels through the power split mechanism 104, enabling the vehicle to switch from the series mode to the power split mode more quickly and smoothly, effectively improving the power response performance of the vehicle during the mode switching process.

In a feasible implementation, referring to FIG. 1 again, the power split mechanism 104 may specifically include a ring gear 1041, a sun gear 1042, a plurality of planet gears 1043 meshed with the ring gear 1041 and the sun gear 1042, and a planet carrier 1044 rotatably connected to the plurality of planet gears 1043. The planet carrier 1044 serves as the first input end of the power split mechanism 104 and is connected to the engine 101. The sun gear 1042 serves as the second input end of the power split mechanism 104 and is connected to the first motor 103. The ring gear 1041 serves as the output end of the power split mechanism 104 and is connected to the transmission input shaft 107. The first synchronizer 105 is disposed between the planet carrier 1044 and the ring gear 1041.

It should be noted that, in series mode, the first synchronizer 105 is in the engaged gear. At this time, the planet carrier 1044 and the ring gear 1041 are in a locked state. Since the second synchronizer 106 is in the neutral gear, the driving force transmitted from the engine 101 to the planet carrier 1044 via the clutch 102 will not be transmitted to the transmission output shaft 108 through the first synchronizer 105, the ring gear 1041, and the transmission input shaft 107. Instead, it will be transmitted sequentially through the plurality of planet gears 1043 and the sun gear 1042 to the first motor 103 to drive the first motor 103 for power generation. The generated electrical energy is provided to the second motor to drive the vehicle.

In the power split mode, the first synchronizer 105 is in the power split gear. At this time, the planet carrier 1044 and the ring gear 1041 are in a disconnected state. The driving force output by the engine 101 will be transmitted to the planet carrier 1044 via the clutch 102. The planet carrier 1044 will transmit a part of the driving force sequentially through the plurality of planet gears 1043 and the sun gear 1042 to the first motor 103 to drive the first motor 103 to charge the traction battery. At the same time, the planet carrier 1044 will transmit the other part of the driving force sequentially through the plurality of planet gears 1043, the ring gear 1041, the transmission input shaft 107, the second synchronizer 106, the transmission output shaft 108, and the front differential 109 to the front axle of the vehicle to drive the vehicle. Based on the above structure, S201 may specifically include the following sub-steps.

S201-1: determining, based on a current engine torque of the engine 101 and a first gear ratio between the sun gear 1042 and the planet carrier, a target motor torque of the first motor 103 1044.

It should be noted that since the first motor 103 is connected to the engine 101 sequentially through the sun gear 1042, the plurality of planet gears 1043, and the planet carrier 1044, and there is a gear connection between the planet carrier 1044 and the sun gear 1042 resulting in a gear ratio. Therefore, the first motor 103 cannot be directly controlled to output a torque opposite to the current engine torque of the engine 101.

In this embodiment, to effectively balance the torque applied to the planet gears 1043 by the engine 101 and the first motor 103, the HCU will determine the target motor torque of the first motor 103 based on the current engine torque of the engine 101 and the first gear ratio between the sun gear 1042 and the planet carrier 1044. Specifically, the target motor torque can be determined according to the following formula: ${T}_{2} = - {T}_{1} \times {i}_{1}$ (1)

Where T2 represents the target motor torque of the first motor 103, T1 represents the current engine torque of the engine 101, and i1 represents the first gear ratio between the sun gear 1042 and the planet carrier 1044.

S201-2: performing, based on the target motor torque, torque regulation on the current motor torque of the first motor 103.

In this embodiment, after the HCU determines the target motor torque, it will activate a torque control mode of the motor controller so that the motor controller adjusts the current motor torque of the first motor 103 to the target motor torque.

In a specific implementation, the current motor torque of the first motor 103 can be controlled to gradually increase or decrease to the target motor torque according to a preset torque regulation gradient. The torque regulation gradient represents an amount of change in the current motor torque of the first motor 103 per unit time, for example, it can be set to 100 N·m/s.

In this embodiment, by gradually increasing or decreasing the current motor torque of the first motor 103 according to the torque regulation gradient, the motor torque regulation can be achieved while effectively avoiding excessive torque changes that could affect the driving smoothness of the vehicle.

In a feasible embodiment, the vehicle mode switching method may further include the following steps.

S301: when the first torque difference between the current motor torque and the target motor torque is less than a first torque threshold, triggering timing for a first duration during which the first torque difference is less than the first torque threshold, and timing for a second duration during which the fluctuation amplitude of the current engine torque is less than a second torque threshold.

In this embodiment, considering that both the first motor 103 and the engine 101 may experience torque fluctuations during the torque regulation process, to ensure the smooth execution of the gear shifting operation of the first synchronizer 105, the torque fluctuation conditions of the first motor 103 and the engine 101 will be detected to determine whether both the first motor 103 and the engine 101 are in a stable operating state.

In a specific implementation, when the HCU first detects that the first torque difference between the current motor torque and the target motor torque is less than the first torque threshold, it will simultaneously trigger the timing for the first duration and the second duration. The first duration represents a duration for which the first motor 103 continuously operates stably in the torque dimension. The second duration represents a duration for which the engine 101 continuously operates stably in the torque dimension.

It should be noted that since control precision of the first motor 103 is greater than that of the engine 101. The second torque threshold can be set to be greater than the first torque threshold. For example, the first torque threshold may be set to 3 N·m, and the second torque threshold may be set to 5 N·m.

S302: when the first duration is greater than a first duration threshold and the second duration is greater than a second duration threshold, determining that the first synchronizer 105 satisfies the first gear shift condition.

In this embodiment, when the first duration is greater than the first duration threshold, it indicates that the current motor torque of the first motor 103 is fluctuating near the target motor torque with an amplitude less than the first torque threshold, i.e., it is in a stable operating state. When the second duration is greater than the second duration threshold, it indicates that the current engine torque of the engine 101 is fluctuating near the original engine torque with an amplitude less than the second torque threshold, also in a stable operating state. The first duration threshold and the second duration threshold can be specifically set based on the control precision of the first motor 103 and the engine 101, for example, both can be set to 50 ms. It should be noted that the original engine torque represents the current engine torque of the engine 101 used when calculating the target motor torque of the first motor 103.

In this embodiment, by monitoring both the current motor torque and the current engine torque during the torque regulation process of the first motor 103, it is possible to accurately determine whether the first synchronizer 105 satisfies the first gear shift condition, thereby ensuring that the first synchronizer 105 can shift gears smoothly, effectively avoiding damage to the first synchronizer 105 or gear shifting failure.

In a feasible embodiment, S202 may specifically include the following sub-steps.

S202-1: determining, based on a current gear of the first synchronizer 105 and a target gear of the second synchronizer 106, a target motor speed of the first motor 103.

In this embodiment, since the first synchronizer 105 and the second synchronizer 106 are arranged between the first motor 103 and the transmission input shaft 107, and different gear states of the first synchronizer 105 and the second synchronizer 106 correspond to different gear ratios, to achieve accurate calculation of the target motor speed of the first motor 103 and ensure that the second synchronizer 106 can smoothly engage the target gear, the HCU will determine the target motor speed of the first motor 103 based on the current gear of the first synchronizer 105 and the target gear of the second synchronizer 106.

In a specific implementation, S202-1 may specifically include the following sub-steps.

S202-1-1: when the current gear of the first synchronizer 105 is the power split gear, determining a gear ratio between the planet carrier 1044 and the ring gear 1041 as a second gear ratio.

It should be noted that different gears of the first synchronizer 105 correspond to different gear ratios. Specifically, when the first synchronizer 105 is in the power split gear, the first synchronizer 105 is in a disengaged gear. At this time, there is a second gear ratio greater than 1 between the planet carrier 1044 and the ring gear 1041, allowing the engine 101 to drive the vehicle more quickly. When the first synchronizer 105 is in the engaged gear, the first synchronizer 105 is in a locked state. At this time, the gear ratio between the planet carrier 1044 and the ring gear 1041 is 1:1, and the engine 101 will no longer transmit power to the transmission input shaft 107 via the ring gear 1041 to drive the vehicle.

S202-1-2: determining, based on the target gear of the second synchronizer 106, a gear ratio between the transmission input shaft 107 and the target wheels as a third gear ratio.

In this embodiment, different gears of the second synchronizer 106 correspond to different gear ratios. Referring to FIG. 1 again, the forward gears include three gears D1, D2, and D3 with decreasing gear ratios, each having its corresponding gear ratio. During the mode switching process, the HCU will determine the target gear of the second synchronizer 106 based on the current vehicle speed and the driver's power demand, and then determine the gear ratio corresponding to the target gear. This gear ratio represents a gear ratio between the transmission input shaft 107 and the transmission output shaft 108. Therefore, by combining the gear ratio corresponding to the target gear and the gear ratio between the transmission output shaft 108 and the target wheels, the gear ratio between the transmission input shaft 107 and the target wheels can be calculated as the third gear ratio.

It should be noted that the target wheels represents wheels on the same side as the first motor 103. For example, when the first motor 103, the engine 101, and the transmission are arranged on the front axle of the vehicle, the target wheels represents the front axle wheels. The current wheel speed can be determined based on a speed signal collected by a wheel speed sensor, or it can be determined based on a current vehicle speed. For example, the current wheel speed of the target wheels may be determined based on a ratio of the current vehicle speed to a wheel circumference.

S202-1-3: determining, based on the second gear ratio, the first gear ratio, and the third gear ratio, a fourth gear ratio between the target wheels and the first motor 103.

In this embodiment, based on the second gear ratio and the first gear ratio, a gear ratio between the sun gear 1042 and the ring gear 1041 can be calculated. Since the first motor 103 and the sun gear 1042 have the same speed, and the ring gear 1041 and the transmission input shaft 107 have the same speed, by further combining the third gear ratio, the fourth gear ratio between the target wheels and the first motor 103 can be calculated.

In a specific implementation, the fourth gear ratio between the target wheels and the first motor 103 can be calculated according to the following formula: ${i}_{4} = {i}_{1} \times {i}_{2} \times {i}_{3}$ (2)

Therein, i4 represents the fourth gear ratio between the target wheels and the first motor 103, i1 represents the first gear ratio between the sun gear 1042 and the planet carrier 1044, i2 represents the second gear ratio between the planet carrier 1044 and the ring gear 1041, and i3 represents the gear ratio between the transmission input shaft 107 and the target wheels.

S202-1-4: determining, based on the fourth gear ratio and the current wheel speed of the target wheels, the target motor speed of the first motor 103.

In a specific implementation, the target motor speed of the first motor 103 can be calculated according to the following formula: $n = {n}_{0} \times {i}_{4}$ (3)

Therein, n represents the target motor speed of the first motor 103, n0 represents the current wheel speed of the target wheels, and i4 represents the fourth gear ratio between the target wheels and the first motor 103.

S202-2: performing, based on the target motor speed, speed regulation on the current motor speed of the first motor 103.

In this embodiment, while sending the speed regulation request to the motor controller, the HCU will also send a speed control flag to the motor controller, so that the motor controller controls the first motor 103 to switch from the torque control mode to the speed control mode, achieving precise control of the motor speed.

In this embodiment, after the motor controller receives the speed regulation request and switches to the speed control mode, it will activate a proportional-integral (PI) speed loop for the first motor 103 to control the current motor speed of the first motor 103 to follow the target motor speed through closed-loop control.

In a specific implementation, a preset PI adjustment strategy can be used to achieve closed-loop control of the motor speed. Specifically, the motor controller has a built-in proportional controller and a built-in integral controller. The motor controller will first calculate the first speed difference between the target motor speed and the current motor speed. Then, the motor controller inputs the current motor speed and the first speed difference into the proportional controller to output a proportional regulation value, and inputs the current motor speed and the first speed difference into the integral controller to output an integral regulation value. Then, based on the proportional regulation value and the integral regulation value, the speed of the first motor 103 is adjusted.

In this embodiment, by comprehensively considering the current gear of the first synchronizer 105 and the target gear of the second synchronizer 106, accurate calculation of the target motor speed can be achieved. At the same time, by performing closed-loop control of the motor speed, rapid and precise control of the current motor speed can be achieved, thereby effectively balancing the speed difference across the second synchronizer 106 and ensuring that the second synchronizer 106 can smoothly engage the target gear.

It should be noted that after the vehicle completes the switching process from the series mode to the power split mode, the HCU will control the first motor 103 to exit the speed control mode and activate a torque control mode, so that the first motor 103 can output torque stably to achieve stable power generation.

In a feasible embodiment, the vehicle mode switching method may further include the following steps.

S401: when the current motor speed of the first motor 103 reaches the target motor speed, triggering timing of a third duration during which a fluctuation amplitude of the current motor speed is less than a speed threshold.

In this embodiment, considering that the first motor 103 may experience speed fluctuations during the speed adjustment process, to ensure the smooth execution of the gear engagement operation of the second synchronizer 106, the speed fluctuation condition of the first motor 103 will be detected based on a preset speed threshold to determine whether the current motor speed of the first motor 103 is in a stable state.

It should be noted that, considering that the gear shifting requirements of the second synchronizer 106 vary at different vehicle speeds, with higher speeds causing more drastic speed changes. Thus, the corresponding speed threshold can be determined based on the current vehicle speed. The speed threshold can decrease as the current vehicle speed increases. For example, when the current vehicle speed is less than or equal to 2 km/h, the speed threshold can be set to 50 rpm; when the current vehicle speed is greater than 2 km/h, the speed threshold can be set to 20 rpm. Thus, by matching a lower speed threshold at high vehicle speeds, it can further ensure that the second synchronizer 106 can shift gears smoothly while the vehicle is in motion.

In a specific implementation, after the HCU first detects that the current motor speed has reached the target motor speed, it will trigger the timing of the third duration. The third duration represents a duration during which the first motor 103 continuously operates stably in the speed dimension.

S402: when the third duration is greater than a third duration threshold, determining that the second synchronizer satisfies the second gear shift condition.

In this embodiment, when the third duration is greater than the third duration threshold, it indicates that the current motor speed of the first motor 103 is fluctuating near the target motor speed with an amplitude less than the speed threshold, i.e., it is in a stable operating state.

In this embodiment, by monitoring the current motor speed during the speed adjustment process of the first motor 103, it is possible to accurately determine whether the second synchronizer 106 satisfies the second gear shift condition, thereby ensuring that the second synchronizer 106 can shift gears smoothly, effectively avoiding damage to the second synchronizer 106 or gear shifting failure.

In a feasible embodiment, S203 may specifically include the following sub-steps.

S203-1: when the second synchronizer 106 satisfies the second gear shift condition, controlling the second synchronizer 106 to perform a pre-synchronization operation, so that a shift fork of the second synchronizer 106 moves to a pre-synchronization position.

It should be noted that the shift fork is a main component in the transmission shifting mechanism, used to move a synchronizer ring to change an input/output speed ratio of the synchronizer to achieve gear shifting. When the second synchronizer 106 is in the neutral gear, the shift fork is at its original position, i.e., a shift fork starting position. By moving left or right, gear shifting of the second synchronizer 106 can be achieved.

In this embodiment, the pre-synchronization position represents a position between the shift fork starting position and the target position. Preferably, the pre-synchronization position can be set close to the target position to shorten a shifting time.

In a specific implementation, after the HCU determines that the second synchronizer 106 satisfies the second gear shift condition, it will send a synchronizer pre-synchronization request to the transmission controller, so that the transmission controller, in response to the synchronizer pre-synchronization request, controls the shift fork of the synchronizer to move to the pre-synchronization position.

S203-2: when it is determined that the shift fork of the second synchronizer 106 has reached the pre-synchronization position and a first torque difference between the current motor torque and the target motor torque is less than a fourth torque threshold, controlling the second synchronizer 106 to move from the pre-synchronization position to a target position, so that the second synchronizer 106 shifts to the target gear.

In this embodiment, after the HCU detects that the shift fork of the second synchronizer has reached the pre-synchronization position, it will monitor the current motor torque to determine whether the current motor torque remains in a stable state. Thus, the gear shifting operation can be performed under the premise of ensuring that the current motor torque remains in a stable state, ensuring the safety of the gear shifting of the second synchronizer 106.

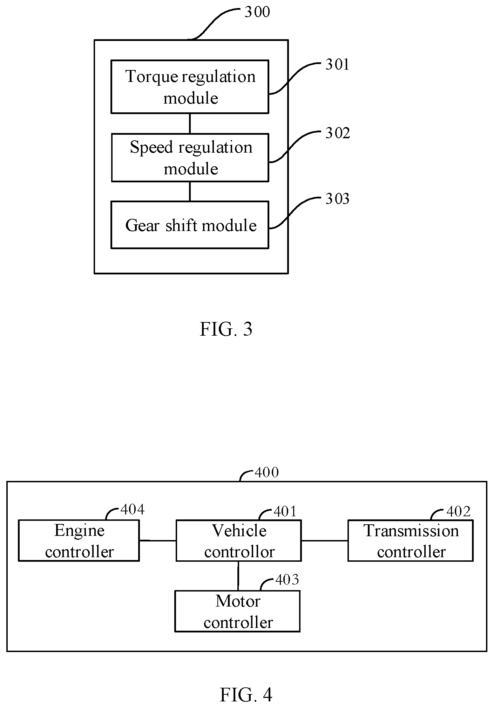

In a second aspect, referring to FIG. 3, an embodiment of the present disclosure provides a vehicle mode switching apparatus 300, applied to a vehicle. The vehicle includes an engine 101, a clutch 102, a first motor 103, and a transmission. The transmission includes a power split mechanism 104, a transmission input shaft 107, a transmission output shaft 108, a first synchronizer 105, and a second synchronizer 106. The engine 101 is connected to a first input end of the power split mechanism 104 via the clutch 102. The first motor 103 is connected to a second input end of the power split mechanism 104. An output end of the power split mechanism 104 is connected to the transmission input shaft 107. The second synchronizer 106 is disposed between the transmission input shaft 107 and the transmission output shaft 108. The first synchronizer 105 is disposed between the first input end and the output end. The vehicle mode switching apparatus 300 includes:
a torque regulation module 301, configured to, in response to a mode switch request for switching from a series mode to a power split mode, maintain the clutch 102 in a closed state and the engine 101 in a driving state, and perform torque regulation on a current motor torque of the first motor 103, so that the first synchronizer 105 satisfies a first gear shift condition.
a speed regulation module 302, configured to, when the first synchronizer 105 satisfies the first gear shift condition, control the first synchronizer 105 to shift from an engaged gear to a power split gear; and perform speed regulation on a current motor speed of the first motor 103, so that, so that the second synchronizer 106 satisfies a second gear shift condition.
a gear shift module 303, configured to, when the second synchronizer 106 satisfies the second gear shift condition, control the second synchronizer 106 to shift from a neutral gear to a target gear, so that the vehicle switches from the series mode to the power split mode.

In an embodiment of the present disclosure, the power split mechanism 104 includes a ring gear 1041, a sun gear 1042, a plurality of planet gears 1043 meshed with the ring gear 1041 and the sun gear 1042, and a planet carrier 1044 rotatably connected to the plurality of planet gears 1043. The planet carrier 1044 is connected to the engine 101, the sun gear 1042 is connected to the first motor 103, the ring gear 1041 is connected to the transmission input shaft 107, and the first synchronizer 105 is disposed between the planet carrier 1044 and the ring gear 1041. The torque regulation module 301 includes:
a target motor torque determination submodule, configured to determine, based on a current engine torque of the engine 101 and a first gear ratio between the sun gear 1042 and the planet carrier 1044, a target motor torque of the first motor 103; and
a torque regulation submodule, configured to perform, based on the target motor torque, torque regulation on the current motor torque of the first motor 103 based on the target motor torque.

In an embodiment of the present disclosure, the vehicle mode switching apparatus 300 further includes:
a first timing module, configured to, when a first torque difference between the current motor torque and the target motor torque is less than a first torque threshold, trigger timing of a first duration during which the first torque difference is less than the first torque threshold, and timing of a second duration during which a fluctuation amplitude of the current engine torque is less than a second torque threshold; and
a first condition determination module, configured to, when the first duration is greater than a first duration threshold and the second duration is greater than a second duration threshold, determine that the first synchronizer 105 satisfies the first gear shift condition.

In an embodiment of the present disclosure, the speed regulation module 302 includes:
a target motor speed determination submodule, configured to determine, based on a current gear of the first synchronizer 105 and a target gear of the second synchronizer 106, a target motor speed of the first motor 103; and
a speed regulation submodule, configured to perform, based on the target motor speed, speed regulation on the current motor speed of the first motor 103.

In an embodiment of the present disclosure, the target motor speed determination submodule includes:
a first gear ratio determination unit, configured to, when the current gear of the first synchronizer 105 is the power split gear, determine a gear ratio between the planet carrier 1044 and the ring gear 1041 as a second gear ratio;
a second gear ratio determination unit, configured to determine, based on the target gear of the second synchronizer 106, a gear ratio between the transmission input shaft 107 and target wheels as a third gear ratio;
a third gear ratio determination unit, configured to determine, based on the second gear ratio, the first gear ratio, and the third gear ratio, a fourth gear ratio between the target wheels and the first motor 103; and
a target motor speed determination unit, configured to determine, based on the fourth gear ratio and a current wheel speed of the target wheels, the target motor speed of the first motor 103.

In an embodiment of the present disclosure, the vehicle mode switching apparatus 300 further includes:
a second timing module, configured to, when the current motor speed of the first motor 103 reaches the target motor speed, trigger timing of a third duration during which a fluctuation amplitude of the current motor speed is less than a speed threshold; and
a second condition determination module, configured to, when the third duration is greater than a third duration threshold, determine that the second synchronizer 106 satisfies the second gear shift condition.

In an embodiment of the present disclosure, the gear shift module 303 includes:
a pre-synchronization submodule, configured to, when the second synchronizer 106 satisfies the second gear shift condition, control the second synchronizer 106 to perform a pre-synchronization operation, so that a shift fork of the second synchronizer 106 moves to a pre-synchronization position; and
a gear shift submodule, configured to, when it is determined that the shift fork of the second synchronizer 106 has reached the pre-synchronization position and a first torque difference between the current motor torque and the target motor torque is less than a fourth torque threshold, control the second synchronizer 106 to move from the pre-synchronization position to a target position, so that the second synchronizer 106 shifts to the target gear.

It should be noted that the specific implementation of the vehicle mode switching apparatus 300 in the embodiments of the present disclosure refers to the specific implementation of the vehicle mode switching method proposed in the first aspect of the embodiments of the present disclosure, and will not be repeated here.

In a third aspect, referring to FIG. 4, an embodiment of the present disclosure provides a vehicle mode switching system 400, applied to a vehicle. The vehicle includes an engine 101, a clutch 102, a first motor 103, and a transmission. The transmission includes a power split mechanism 104, a transmission input shaft 107, a transmission output shaft 108, a first synchronizer 105, and a second synchronizer 106. The engine 101 is connected to a first input end of the power split mechanism 104 via the clutch 102. The first motor 103 is connected to a second input end of the power split mechanism 104. An output end of the power split mechanism 104 is connected to the transmission input shaft 107. The second synchronizer 106 is disposed between the transmission input shaft 107 and the transmission output shaft 108. The first synchronizer 105 is disposed between the first input end and the output end. The vehicle mode switching system 400 includes a vehicle controller 401, a transmission controller 402, a motor controller 403, and an engine controller 404.

The vehicle controller is configured to, in response to a mode switch request for switching from a series mode to a power split mode, send a clutch state hold request to the transmission controller, send an engine state hold request to the engine controller, and send a torque regulation request to the motor controller.

The transmission controller is configured to, in response to the clutch state hold request, maintain the clutch 102 in a closed state.

The engine controller is configured to, in response to the engine state hold request, maintain the engine 101 in a driving state.

The motor controller is configured to, in response to the torque regulation request, perform torque regulation on a current motor torque of the first motor 103, so that the first synchronizer 105 satisfies a first gear shift condition.

The vehicle controller is further configured to, when the first synchronizer 105 satisfies the first gear shift condition, control the transmission controller to shift the first synchronizer 105 from an engaged gear to a power split gear, and send a speed regulation request to the motor controller.

The motor controller is further configured to, in response to the speed regulation request, perform speed regulation on a current motor speed of the first motor 103, so that the second synchronizer 106 satisfies a second gear shift condition.

The vehicle controller is further configured to, when the second synchronizer 106 satisfies the second gear shift condition, control the transmission controller to shift the second synchronizer 106 from a neutral gear to a target gear, so that the vehicle switches from the series mode to the power split mode.

It should be noted that the specific implementation of the vehicle mode switching system 400 in the embodiments of the present disclosure refers to the specific implementation of the vehicle mode switching method proposed in the first aspect of the present disclosure, and will not be repeated here.

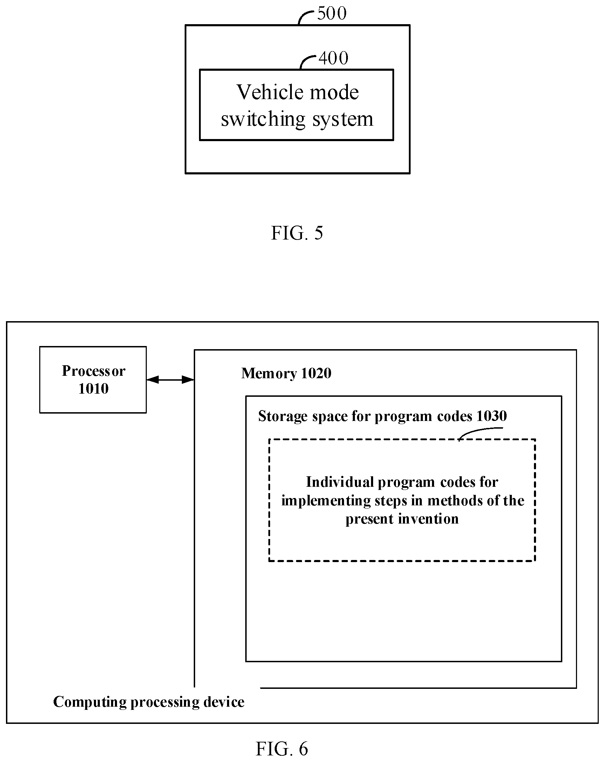

In a fourth aspect, referring to FIG. 5, an embodiment of the present disclosure provides a vehicle 500, including the vehicle mode switching system 400 proposed in the third aspect of the present disclosure.

It should be noted that, for the specific implementation of the vehicle 500 according to the embodiment of the present application, reference is made to the specific implementation of the vehicle mode switching system 400 proposed in the third aspect of the embodiment of the present application, and details are not repeated here.

The apparatus embodiments described above are merely illustrative. The units described as separate components may or may not be physically separate, and the components shown as units may or may not be physical units, i.e., they may be located in one place or distributed across multiple network units. Some or all of the modules may be selected according to actual needs to achieve the objectives of the solutions of the embodiments. Those of ordinary skill in the art can understand and implement the solutions without creative effort.

The various component embodiments of the present disclosure may be implemented in hardware, or in software modules running on one or more processors, or in a combination thereof. Those skilled in the art should understand that a microprocessor or a Digital Signal Processor (DSP) may be used in practice to implement some or all functions of some or all components in a computing processing device according to the embodiments of the present disclosure. The present disclosure may also be implemented as a device or apparatus program for executing part or all of the methods described herein, such as a computer program and a computer program product. Such a program implementing the present disclosure may be stored on a computer-readable medium, or may have the form of one or more signals. Such signals may be downloaded from an Internet website, or provided on a carrier signal, or provided in any other form.

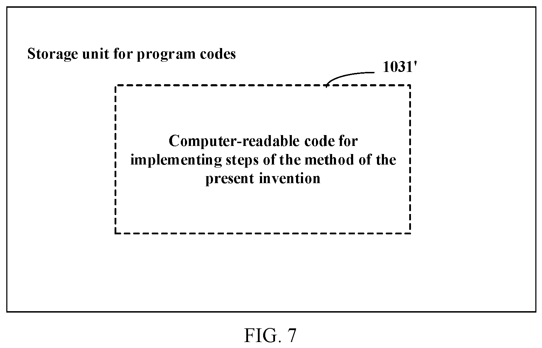

For example, FIG. 6 shows a computing processing device that can implement the methods according to the present disclosure. The computing processing device traditionally includes a processor 1010 and a computer program product or computer-readable medium in the form of a memory 1020. The memory 1020 may be an electronic memory such as flash memory, Electrically Erasable Programmable Read-Only Memory (EEPROM), Erasable Programmable Read-Only Memory (EPROM), a hard disk, or Read-Only Memory (ROM). The memory 1020 has a storage space for program codes 1030 for executing any method steps of the above methods. For example, the storage space for program codes 1030 may include respective program codes for implementing the above method steps S201-S203, S01-S302, S401-S402. These program codes may be read from or written into one or more computer program products. These computer program products include program code carriers such as hard disks, compact disks (CDs), memory cards, or floppy disks. Such a computer program product is typically a portable or fixed storage unit as described with reference to FIG. 7. The storage unit may have storage segments, storage spaces, etc., arranged similarly to the memory 1020 in the computing processing device of FIG. 6. The program codes may be compressed in an appropriate form, for example. Typically, the storage unit includes computer-readable codes 1031, i.e., codes readable by a processor such as 1010, which, when executed by the computing processing device, cause the computing processing device to perform the various steps of the methods described above.

The terms "one embodiment," "an embodiment," or "one or more embodiments" as used herein mean that a particular feature, structure, or characteristic described in connection with the embodiment is included in at least one embodiment of the present disclosure. Furthermore, note that the examples of the phrase "in one embodiment" herein do not necessarily all refer to the same embodiment.

Finally, it should be noted that the above embodiments are only used to illustrate the technical solutions of the present disclosure, and not to limit them. Although the present disclosure has been described in detail with reference to the foregoing embodiments, those of ordinary skill in the art should understand that they can still modify the technical solutions described in the foregoing embodiments, or perform equivalent substitutions for some of the technical features thereof. These modifications or substitutions do not cause the essence of the corresponding technical solutions to depart from the spirit and scope of the technical solutions of the embodiments of the present disclosure.

## Claims

1. A vehicle mode switching method, wherein the vehicle comprises an engine, a clutch, a first motor, and a transmission; the transmission comprises a power split mechanism, a transmission input shaft, a transmission output shaft, a first synchronizer, and a second synchronizer; the engine is connected to a first input end of the power split mechanism via the clutch; the first motor is connected to a second input end of the power split mechanism; an output end of the power split mechanism is connected to the transmission input shaft; the second synchronizer is disposed between the transmission input shaft and the transmission output shaft; the first synchronizer is disposed between the first input end and the output end; the method comprises:
in response to a mode switch request for switching from a series mode to a power split mode, maintaining the clutch in a closed state and the engine in a driving state, and performing torque regulation on a current motor torque of the first motor, so that the first synchronizer satisfies a first gear shift condition;
when the first synchronizer satisfies the first gear shift condition, controlling the first synchronizer to shift from an engaged gear to a power split gear, and performing speed regulation on a current motor speed of the first motor, so that the second synchronizer satisfies a second gear shift condition; and
when the second synchronizer satisfies the second gear shift condition, controlling the second synchronizer to shift from a neutral gear to a target gear, so that the vehicle switches from the series mode to the power split mode.

2. The vehicle mode switching method according to claim 1, wherein the power split mechanism comprises a ring gear, a sun gear, a plurality of planet gears meshed with the ring gear and the sun gear, and a planet carrier rotatably connected to the plurality of planet gears; the planet carrier serves as the first input end and is connected to the engine; the sun gear serves as the second input end and is connected to the first motor; the ring gear serves as the output end and is connected to the transmission input shaft; the first synchronizer is disposed between the planet carrier and the ring gear;
the step of performing torque regulation on the current motor torque of the first motor comprises:
determining, based on a current engine torque of the engine and a first gear ratio between the sun gear and the planet carrier, a target motor torque of the first motor; and
performing, based on the target motor torque, torque regulation on the current motor torque of the first motor.torque regulation gradient

3. The vehicle mode switching method according to claim 2, further comprising:
when a first torque difference between the current motor torque and the target motor torque is less than a first torque threshold, triggering timing of a first duration during which the first torque difference is less than the first torque threshold, and timing of a second duration during which a fluctuation amplitude of the current engine torque less than a second torque threshold; and
when the first duration is greater than a first duration threshold and the second duration is greater than a second duration threshold, determining that the first synchronizer satisfies the first gear shift condition.

4. The vehicle mode switching method according to claim 2, wherein the step of performing speed regulation on the current motor speed of the first motor comprises:
determining, based on a current gear of the first synchronizer and a target gear of the second synchronizer, a target motor speed of the first motor; and
performing, based on the target motor speed, speed regulation on the current motor speed of the first motor.

5. The vehicle mode switching method according to claim 4, wherein the step of determining, based on the current gear of the first synchronizer and the target gear of the second synchronizer, the target motor speed of the first motor comprises:
when the current gear of the first synchronizer is the power split gear, determining a gear ratio between the planet carrier and the ring gear as a second gear ratio;
determining, based on the target gear of the second synchronizer, a gear ratio between the transmission input shaft and target wheels as a third gear ratio;
determining, based on the second gear ratio, the first gear ratio, and the third gear ratio, a fourth gear ratio between the target wheels and the first motor; and
determining, based on the fourth gear ratio and a current wheel speed of the target wheels, the target motor speed of the first motor.

6. The vehicle mode switching method according to claim 4, further comprising:
when the current motor speed of the first motor reaches the target motor speed, triggering timing of a third duration during which a fluctuation amplitude of the current motor speed is less than a speed threshold; and
when the third duration is greater than a third duration threshold, determining that the second synchronizer satisfies the second gear shift condition.

7. The vehicle mode switching method according to claim 2, wherein the step of controlling the second synchronizer to shift from the neutral gear to the target gear when the second synchronizer satisfies the second gear shift condition comprises:
when the second synchronizer satisfies the second gear shift condition, controlling the second synchronizer to perform a pre-synchronization operation, so that a shift fork of the second synchronizer moves to a pre-synchronization position; and
when it is determined that the shift fork of the second synchronizer has reached the pre-synchronization position and a first torque difference between the current motor torque and the target motor torque is less than a fourth torque threshold, controlling the second synchronizer to move from the pre-synchronization position to a target position, so that the second synchronizer shifts to the target gear.

8. A vehicle mode switching apparatus, wherein the vehicle comprises an engine, a clutch, a first motor, and a transmission; the transmission comprises a power split mechanism, a transmission input shaft, a transmission output shaft, a first synchronizer, and a second synchronizer, the engine is connected to a first input end of the power split mechanism via the clutch, the first motor is connected to a second input end of the power split mechanism, an output end of the power split mechanism is connected to the transmission input shaft, the second synchronizer is disposed between the transmission input shaft and the transmission output shaft, and the first synchronizer is disposed between the first input end and the output end; the apparatus comprises:
a torque regulation module, configured to, in response to a mode switch request for switching from a series mode to a power split mode, maintain the clutch in a closed state and the engine in a driving state, and perform torque regulation on a current motor torque of the first motor, so that the first synchronizer satisfies a first gear shift condition;
a speed regulation module, configured to, when the first synchronizer satisfies the first gear shift condition, control the first synchronizer to shift from an engaged gear to a power split gear; and perform speed regulation on a current motor speed of the first motor, so that the second synchronizer satisfies a second gear shift condition;
a gear shift module, configured to, when the second synchronizer satisfies the second gear shift condition, control the second synchronizer to shift from a neutral gear to a target gear, so that the vehicle switches from the series mode to the power split mode.

9. A vehicle mode switching system, wherein the vehicle comprises an engine, a clutch, a first motor, and a transmission; the transmission comprises a power split mechanism, a transmission input shaft, a transmission output shaft, a first synchronizer, and a second synchronizer, the engine is connected to a first input end of the power split mechanism via the clutch, the first motor is connected to a second input end of the power split mechanism, an output end of the power split mechanism is connected to the transmission input shaft, the second synchronizer is disposed between the transmission input shaft and the transmission output shaft, and the first synchronizer is disposed between the first input end and the output end; the system comprises a vehicle controller, a transmission controller, a motor controller, and an engine controller; wherein,
the vehicle controller is configured to, in response to a mode switch request for switching from a series mode to a power split mode, send a clutch state hold request to the transmission controller, send an engine state hold request to the engine controller, and send a torque regulationtorque regulation request to the motor controller;
the transmission controller is configured to, in response to the clutch state hold request, maintain the clutch in a closed state;
the engine controller is configured to, in response to the engine state hold request, maintain the engine in a driving state;
the motor controller is configured to, in response to the torque regulation request, perform torque regulation on a current motor torque of the first motor, so that the first synchronizer satisfies a first gear shift condition;
the vehicle controller is further configured to, when the first synchronizer satisfies the first gear shift condition, control the transmission controller to shift the first synchronizer from an engaged gear to a power split gear, and send a speed regulation request to the motor controller;
the motor controller is further configured to, in response to the speed regulation request, perform speed regulation on a current motor speed of the first motor, so that the second synchronizer satisfies a second gear shift condition;
the vehicle controller is further configured to, when the second synchronizer satisfies the second gear shift condition, control the transmission controller to shift the second synchronizer from a neutral gear to a target gear, so that the vehicle switches from the series mode to the power split mode.

10. A vehicle, comprising the vehicle mode switching system according to claim 9.

11. A computer program, comprising computer-readable codes, wherein when the computer-readable codes are executed on a computing processing device, the computing processing device is configured to perform the vehicle mode switching method according to any one of claims 1 to 7.

12. A computer-readable medium, wherein the computer program according to claim 11 is stored in the computer-readable medium.
